# EUROPEAN PATENT APPLICATION

(11) **EP 3 336 402 A1**
(43) Date of publication of application: **20.06.2018**
(21) Application number: 17205840.6
(22) Date of filing: 07.12.2017
(51) Int. Cl.: F16L 37/48

(54) **IMPROVED UNIVERSAL FITTING FOR TAPS**

(30) Priority: 13.12.2016 IT 201600125535
(71) Applicant: Water Powered S.r.l., 80147 Napoli (IT)
(72) Inventor: SODO, Diego, 80147 Napoli (IT)
(74) Representative: Giugni, Diego

(57) **Abstract**

The present invention relates to a improved universal fitting (1) for taps, i.e. a coupling device which can be connected to the outlet of a variety of water taps regardless of their model, shape or section of their outlet opening. The fitting is characterized by the presence of tightening and clamping elements (4) on said opening, which are particularly simple and easy to manufacture and use, while retaining high reliability and additional fine adjustment capacity to the seal in case of deformations of the sealing elements (3).

## Description

### TECHNICAL FIELD OF INVENTION

The present invention relates to a improved universal fitting for taps, i.e. a coupling device which can be connected to the outlet of a variety of water taps regardless of their model, shape or section of their outlet opening.

### PRIOR ART

In general, coupling devices are known to allow the coupling of a tap to a water supply to a utility, such as an ejector, an irrigator or a shower, for example by means of a quick connection and a flexible tube. Such a connector is indispensable when a user of the aforementioned items is used outside the home, for example while traveling, and its quick connection is not applicable to the tap available at the time. There are several documents describing fittings or connectors, such as, for example, US patents US778,491, US1,734,757, US2,219,813 and US4,822,076. The devices shown there have some common characteristics: they all include an upper retaining part in the shape of a collar, which is intended to be fixed, almost always with three screws angularly equidistant by 120°, a tap, and a lower attaching part to the utility. The lower attaching part is linked, by threaded coupling, to the upper retaining part, and a circular, crown-shaped flat gasket is interposed between one and the other. The top side of the flat gasket maintains adherence to the opening of the tap by tightly screwing the lower attaching part to the upper retaining part.

The fittings under the aforementioned patents present some disadvantages. At a constructive level, one disadvantage stems from the fact that they are formed by a significant number of parts that require precision machining since they are joined, functionally, to each other. Other disadvantages are in the installation, which should be convenient and quick because the fitting is installed on the tap only when needed, and then detached from it. In the above-mentioned devices, the upper retaining part is locked onto the tap opening by acting individually on the three screws and subsequently must be adjusted to couple the lower attaching part to the upper retaining part. The screws must all be screwed in at the same rate so as to obtain a balance of the tap opening on the flat gasket: otherwise there is the risk of an imperfect seal. Functionally, a single flat gasket, centrally perforated, does not guarantee an effective seal, unless you carefully align the coupling between the upper retaining part and the lower attaching part.

In U.S. Pat. No. 1,292,524, which describes an fitting of the same type as those mentioned above, the gasket is in the form of an elastic washer, not flat, but truncated. A peripheral ring is retained between the upper retaining part and the lower attaching part, while its walls are converging and tap down to adhere to the opening of the tap. The lower end of the truncated elastic washer is free and, having a diameter smaller than that of the tap opening, is deformed elastically by the sliding over of it. This device uses the pressure of water, which, entering into the lower attaching part, press the truncated elastic washer against the tap, helping the elasticity of the material to achieve a watertight seal from the fitting.

U.S. Patent No. 1,292,524 provides an fitting that solves the problem of hermetic sealing; since, however, the truncated elastic washer should be chosen according to the diameter of the tap opening, the fitting as proposed is not applicable to every tap opening. In addition, as for the aforementioned patents, including the fitting under U.S. 1,292,594 the screws must be screwed one by one from the upper retaining part to the tap opening with the above mentioned resultant disadvantages.

A solution to the aforementioned disadvantages has been proposed by patent application WO2014/102264 in which various universal fitting solutions are proposed, wherein the three previously described screws used as a means of attaching to the tap opening are connected together by means of a control ring. This ring allows for their adjustment at the same time without the need to turn each of the screws to achieve optimum centering of the tap opening with the central hole of the fitting. This solution, though surely improving over the previous solutions, has the disadvantage of being complicated in its construction. The complexity involves greater risk of malfunction and higher production costs. Additionally, the simultaneous adjustment of the three screws with the same degree of movement does not allow for any deformation/asymmetry of the gasket hole to be corrected with respect to the tap opening.

### SUMMARY OF THE INVENTION

The technical problem underlying the present invention is therefore to provide a universal tap fitting that requires simple and practical fastening operation to any type of tap, regardless of size, and is made with few pieces to increase its effectiveness and at the same time reduce the risk of malfunction.

Therefore, a first objective of the invention is to provide a universal fitting for specialized taps which is realized with a small number of parts.

Another objective of the invention is to provide a universal tap fitting which has a very compact construction so that there is no need to combine various parts together since they are already assembled and cooperate with each other.

Yet another objective of the invention is to provide a universal tap fitting in which no subsequent screwing of several retaining screws at the opening of a tap is required, and at the same time it allows one to obtain an optimum seal with the opening of the tap.

A further objective is to provide an fitting capable of performing fine adjustments to compensate for asymmetries between the hole in the sealing gasket and the hole of the tap opening.

### BRIEF DESCRIPTION OF THE FIGURES

Additional characteristics and advantages of the invention of the improved universal fitting for taps, will become more apparent from the following description of a form of embodiment given merely as a non-limiting example with reference to the following figures, wherein:
- Figure 1 is an axonometric and exploded view of the universal tap fitting under the present invention;
- Figure 2A is an axonometric view of the assembled Figure 1 fitting;
- Figure 2B represents a lateral view of the fitting of Figure 2A;
- Figure 2C is a lateral and sectional view along the line A-A of the fitting of Figure 2B.

### DETAILED DESCRIPTION OF THE INVENTION

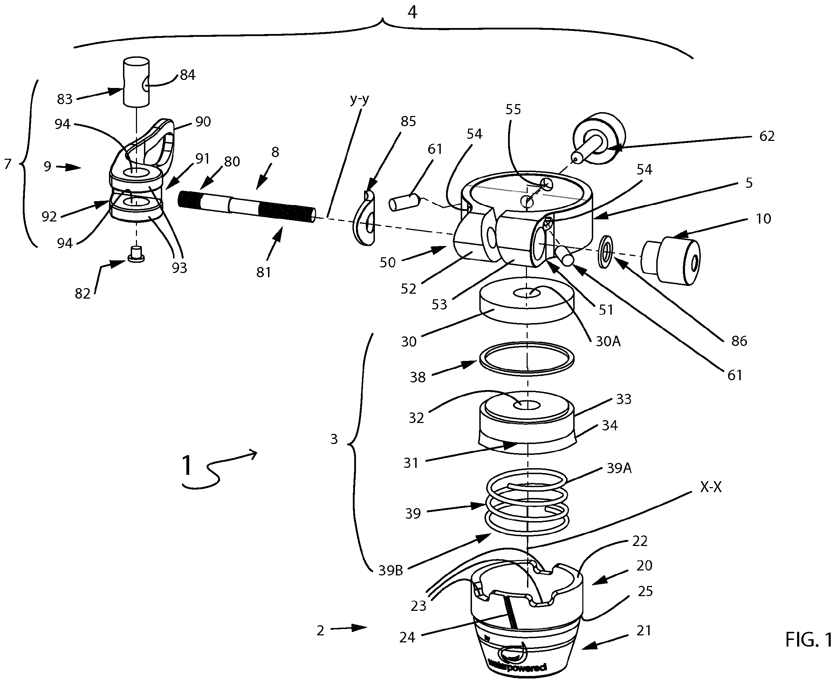

As shown in Figure 1, the universal fitting, under the present invention, is indicated as a whole with the reference number 1. This fitting includes a functional hollow body 2, water seal elements 3 housed within said hollow body and reversible tightening elements 4 of the hollow body to the opening of the tap (not shown) of the water supply.

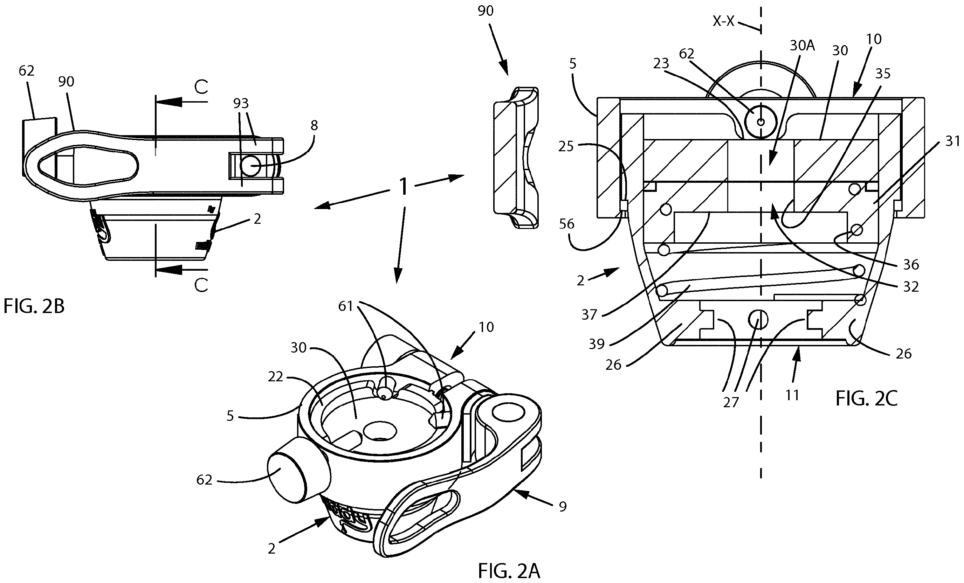

The functional hollow body 2 is generally a hollow cylinder, preferably tapered along its axis X-X from a first end 20 to a second end 21. The first end 20, which is intended to be fixed to the opening of a tap, shows a circular edge 22 including a plurality of seats 23 for radial positioning of the pins or reversible locking screws of the fitting on said opening, as explained below. Preferably, said seats 23 are constituted by three notches in the edge 22 spaced along its circumference so as to identify the three extreme points of a Y. In addition, the outer surface of the first end may have an identifying sign 24 of the correct coupling of the hollow body 2 with the corresponding tightening elements 4, as described below. Preferably, this sign is constituted by an inclined relief section with respect to the X-X axis. On the outer surface, then the first end 20 connects with the rest of the hollow body by means of a step 25 of support on a corresponding step of the tightening elements 4 described below. The second end 21, preferably smaller in diameter than the first end, is equipped with a radial flange 26 (Figure 2C) on the inner surface, positioned close to the opening of the same second end. From the edge of flange 26 radially projecting first means 27 of reversible coupling which cooperates with second means of reversible coupling situated on a water dispensing device (not shown) for a utility as described above.

It should be noted that the hollow body 2 is made of hard but elastic plastic so as to allow a certain degree of compressibility by the tightening elements 4, as explained hereinafter.

The water seal elements 3 include a polymeric ring 30 and a lip gasket 31, preferably these components are joined together in a solid manner, for example by bonding. The ring 30 is made of polymeric rubber preferably in soft material such as neoprene or silicone or other similar material suitable for the function of sealing, and is housed close to the edge 22 of the hollow body 2 when the fitting is operative. Its central hole 30A is engineered around the XX axis. The gasket 31 has a generally cylindrical shape with a central hole 32 in axis with the hole 30A of the ring 30. The gasket is also made of polymeric rubber. In particular, the gasket includes a first portion 33 of a generalized discoid shape substantially similar to the shape of the polymeric ring 30 and a second portion 34 in a ring-shaped band extending from the peripheral edge of one of the two sides of the first portion in an axial direction (Figure 2C) so as to form a ring-shaped lip typical of lip gaskets. In this configuration, the central hole 32 has a first section 35 of a small diameter equal to the diameter of the hole 30A of the ring 30 and in continuity with the same, a second section 36 of an enlarged diameter to form an axial step 37 (Figure 2C) facing the second portion 34 of the gasket 31. Preferably, this gasket is made of nitrile rubber or flouro elastomers or other material suitable for the function of sealing and, always preferably, the second portion has a flared progression with respect to the first portion.

In accordance with a preferred form of embodiment, a further rigid material ring 38 is interposed between the ring 30 and the gasket 31, which serves a function of stabilizing both the ring and the seal in the event of high pressures which can be created inside of the hollow body 2. In other words, excessive return pressure could affect these two sealing elements deforming them excessively so as to affect the seal at the level of contact with the tap opening. Therefore, this rigid ring, secured between the two contact surfaces of the polymeric ring 30 and the gasket 31 close to their outer circumferences, prevents such deformations. It should be noted that alternatively, the rigid ring can be incorporated into the gasket 31.

A spring 39 completes the elements 3 of sealing the water. In particular, said spring is helical and made of metallic material, preferably with a conical truncation progression having a first end 39A narrower than a second end 39B.

The tightening elements 4 advantageously include a tube clamp band 5 interposed between the opening of a tap and a utility and carrying a plurality of tightening screws 6, and a kneeling clamp 7 or a lever.

The tube clamp band 5 is constituted by an open ring whose extremities 50 and 51 are provided with a first 52 and second 53 slot for engagement with the locking clamp 7. Preferably, each slot 52, 53 includes a contact surface with the protruding section 24 formed on the outer surface of the hollow body 2 in order to facilitate the proper mounting of the band on the body itself. In addition, the band includes a plurality of through holes preferably threaded to engage tightening screws or pins 6. Preferably, there are three holes which are arranged on the circumference of the band so as to identify the three extreme points of a Y. In particular, two first holes 54 are positioned each in correspondence with the two slots 52, 53, while a second hole 55 is substantially diametrically opposite to said two first holes. In addition, the inner surface of the band includes a radial step 56 (Figure 2C) acting in coordination with the step 25 of the hollow body 2, as explained below.

The tightening screws 6 are preferably in the number of three, two first screws 61 being adjustable before mounting the clamp 7 and a second screw 62 being adjustable at any time, as explained below. Moreover, the first two screws 61 each engage a corresponding first hole 54, while the second screw 62 engages the second hole 55. It should be noted that these screws usually end with a pointed end that could damage the outside of the opening of the tap when tightened. Therefore, preferably, such screws include a coating (not shown) on the tightening end on the tap opening such that it will not ruin its surface. This coating can be, for example, a rubber elastic hood that functions as a type of pressed clip against the tap opening so as to slip between the point of the screws and the opening itself.

The clamp 7 is advantageously provided by a kneeling or leverage clamp, comprising a pivot pin 8 engaging with said tube clamp band 5, a lever 9 with clamping action and a lever drive counter nut 10. The pin 8 is provided with a first end 80 connecting to the lever 9 and a second end 81 connecting to the nut 10. Preferably, the first end 80 is crossed by a hole (not shown) transverse to the longitudinal axis Y-Y of the pin itself. Said hole can be threaded so as to be engaged by a corresponding screw 82 of a pin retainer 83. The second end 81 is threaded to allow screwing of the nut 10. The lever 9 includes a gripping portion 90 and a connecting portion 91 with the pin 8. The gripping portion 90 is preferably conformed to an elongated ring, while the clamping portion 91 is equipped with a fork 92 whose two branches 93 are crossed by a through hole 94 for inserting said retainer 83 of the pin 8. In particular, the through hole 94 is circular and the retainer 83 is a cylinder having an axial (not shown) engagement hole with said screw 82 and a transversal cross-hole 84 for engagement with the first end 80 of the pin 8. Preferably, further, the clamp 4 includes a first washer 85 interposed between said fork 92 and the first slot 52 of the band 5, and a second washer 86 interposed between the second slot 53 of the band 5 and nut 10. The first washer 85 is preferably shaped to fit a portion of the outer surface of the fork 92.

The assembly of the universal fitting 1 under the present invention involves the insertion of the spring 39 inside the hollow body 2, preferably with its second end 39B which is supported on the flange 26 of said hollow body. Then, the lip gasket 31 with the polymeric ring 30, and preferably the rigid ring 38, is inserted into the hollow body so that the step 37 runs counter to the first end 39A of the spring 39.

The hollow body 2 can now be fitted on the band 5 so that its step 25 is supported on the radial step 56 of the band and so that the trailing section 24 engages between the space defined by the two slots 52, 53 of the band. At the same time, and automatically, the seats 23 of the circular edge 22 of the first end 20 of the hollow body 2 are respectively in correspondence with each of the first through holes 54 and 55.

The clamp 7 is then mounted on the band 5 by first inserting the retainer 83 into the holes 94 of the two branches 93 of the fork 92 of the lever 9. Then, the first end 81 of the pin 8 is inserted between the two branches 93 so as to pass the through hole 84 of the retainer 83. The fastening screw 82 is now inserted through one of the two holes 94 of one of the two branches of the fork and screwed in the retainer 83 so as to clamp the first end 81 of the pin 8 in position. It should be noted that before inserting the pin 8 into the slots of the band, it is possible to screw the first two screws 61 and the second tightening screw 62 into their respective first holes 54 and second hole 55 of the band so as to engage each respective seat 23 of the edge 22 of the hollow body 2 protruding into its inner cavity. By doing so, the sealing elements 3 are maintained in an operative position in the hollow body

At this point, the pin 8 with the lever 9 is inserted into the two slots 52, 53 of the tube clamp band 5, after having attached the first washer 85 to the pin, so that its second end 81 extends from the slots itself. Once the second washer 86 is inserted onto the pin 8, the nut 10 is screwed onto the second end 81.

Fitting 1 is now ready for use. In fact, as shown in Figures 2A and 2B, the fitting 1 is in the form of a main body with a first side 10 to be tightened to the opening of a tap (not shown), that is, the side carrying the polymeric ring 30, and a second side 11 connecting to a utility (not shown), i.e. the side which brings the first coupling means 27 to the utility. Therefore, it will be sufficient to rotate the lever 90 away from the hollow body 2 and unscrew the second tightening screw 62 to allow the hollow body 2 to be inserted from the side of said first side 10 onto the opening of a tap. Subsequently, the second screw 62 is tightened so as to achieve the fine centering of the opening of the tap opening with the center lip 36 of the lip gasket 3. At this point, the lever 90 can be brought to the closed position, i.e. in close contact with or near the hollow body 2.

From what has been explained above, it is clear that the improved universal tap fitting of the present invention solves the disadvantages with reference to the prior art and at the same time achieves significant advantages.

In fact, the structure of the fitting is considerably simplified, both because the number of elements that comprise it has been reduced, and because the elements themselves have been simplified in their forms.

The new kneeling tighten system also allows one single action to tighten the fitting securely to the tap opening.

In addition, the fitting can further include the fine-tuning/tightening feature by allowing only one of the tightening screws to operate, the other two being fixed when assembling the fitting. In any case, for specific needs, the other two screws can also be adjusted as explained above and only the second screw operated for the aforementioned fine adjustment.

Ultimately, mounting the fitting to the tap opening is very quick and safe, while the possibility of fine adjustments during assembly of the fitting and when it is mounted on the tap opening adds a very important feature in a very simple way.

The universal fitting of the present invention may, however, be subjected to variants dictated by particular needs or preferences, all of which are within the scope of the field technician and fall within the scope of the attached claims.

For example, the shape of individual elements can be modified as desired, such as the hollow body whose outer wall may be different from the cylindrical one.

The thickness of the lip gasket, the polymeric ring and the rigid ring as well as the respective materials may vary depending on the pressures detected in the water supply or the size of the tap opening.

The elastic characteristics of the elastic spring can be calibrated according to the characteristics of the lip gasket and the polymer ring used to make the seal, also taking into account the pressure of the water flowing out of the tap opening and the size of the hollow body.

The tightening elements such as the clamp and the respective screws are preferably made of corrosion-resistant metal, such as stainless steel. The respective gripping portions can be covered with plastic materials that facilitate control.

Additionally, the fitting may be equipped with an allen wrench or key and the tightening screws of an end with an allen section to facilitate screwing.

The first coupling means of the hollow body to the utility may also be represented by a thread cooperating with a counter thread of said utility, or other quick connection system such as a snap mechanism with elastic coupling.

## Claims

1. Universal tap fitting (1) comprising a hollow body (2) extending along a longitudinal axis (X-X) and to be positioned between a tap and a user device, water sealing elements (3) housed within the hollow body and reversibly tightening means (4) to tighten the hollow body to said tap, **characterized in that** said tightening means (4) comprises a hose-tightening ring (5) carrying a plurality of tightening screws or pins (6) protruding within the cavity of said hollow body (2) and a lever clamp (7) to tighten said ring (5) around said hollow body.

2. Universal fitting (1) according to claim 1, wherein said hose-tightening ring (5) comprises three crossing holes (54, 55) positioned along the circumference of the ring so that to identify the three apexes of a Y, said holes being engaged by said tightening screws (6).

3. Universal fitting (1) according to claim 2, wherein said three holes comprises two first holes (54) each positioned in correspondence of one of the two loops (52, 53) of the hose-tightening ring (5) and a second hole (55) positioned substantially diametrically opposite to said two first holes.

4. Universal fitting (1) according to any one of claims 1 to 4, wherein said hose-tightening ring (5) comprises a radial step (56) adapted to form a stop against a step (25) of the inner surface of the hollow body (2).

5. Universal fitting (1) according to claims 3 or 4, wherein said plurality of screws (6) comprises two first screws (61) for engaging said two first holes (54) of the hose-tightening ring (5), said screws being movable before assembling the lever clamp (7) onto the same ring, and a second screw (62) engaging said second hole (55) of said ring in a movable manner in every assembly of the fitting.

6. Universal fitting (1) according to any one of claims 1 to 4, wherein said lever clamp (7) comprises a pin (8) for engaging said hose-tightening ring (5), a lever (9) for activating the lever clamp and a nut (9) for opposing the lever activation.

7. Universal fitting (1) according to any one of claims 1 to 6, wherein said hollow body (2) comprises a first end (20) and a second end (21), the first end having a circular edge (22) provided with a plurality of seats (23) for the radial positioning of said pins or screws (6) for tightening to the tap, the second end having an inner radial flange (26) whose edge is provided with first reversible means (27) protruding from the same edge to cooperate with second reversible means positioned on said user device.

8. Universal fitting (1) according to any one of claims 4 to 7, wherein said hollow body (2) comprises a step (25) onto its outer surface and against which the radial step (56) of the hose-tightening ring (5) stops.

9. Universal fitting (1) according to any one of claims 1 to 8, wherein said sealing elements (3) comprises a polymeric ring (30) for contacting the tap, a lip gasket (31) fixed to said ring and a spring (39) for pushing the lip gasket and the ring in an operative position.

10. Universal fitting (1) according to claim 9, wherein said sealing elements (3) comprises a rigid ring (38) between the polymeric ring (30) and the lip gasket (31) and/or said tightening screws (6) comprises a coating onto their tip to avoid to damage the outer surface of the tap.
